# EUROPEAN PATENT SPECIFICATION

(11) **EP 3 640 473 B1**
(45) Date of publication and mention of the grant of the patent: **05.07.2023**
(21) Application number: 17913165.1
(22) Date of filing: 03.11.2017
(51) Int. Cl.: F03D 15/10, F03D 9/00

(54) **TRANSMISSION SYSTEM FOR SEMI-DIRECT WIND POWER GENERATING SET**
ÜBERTRAGUNGSSYSTEM FÜR HALBDIREKTEN WINDENERGIEERZEUGUNGSSATZ
SYSTÈME DE TRANSMISSION POUR ENSEMBLE DE PRODUCTION D'ÉNERGIE ÉOLIENNE SEMI-DIRECTE

(30) Priority: 14.06.2017 CN 201710447299
(43) Date of publication of application: 22.04.2020
(73) Proprietor: CRRC Shandong Wind Power Co., Ltd., Jinan, Shandong 250104 (CN)
(72) Inventor: ZHAO, Dengli, Jinan Shandong 250104 (CN); LV, Chao, Jinan Shandong 250104 (CN); YU, Liangfeng, Jinan Shandong 250104 (CN); LIU, Yong, Jinan Shandong 250104 (CN)
(74) Representative: ZHAOffice SPRL
(86) International application number: PCT/CN2017/109390
(87) International publication number: WO 2018/227855

(56) References cited:
- WO-A1-2005/075822
- CN-A- 1 682 033
- CN-A- 101 865 084
- CN-A- 101 865 084
- CN-A- 102 282 364
- CN-A- 103 742 607
- CN-U- 202 746 020
- CN-U- 206 929 027
- US-A1- 2011 142 649
- US-A1- 2016 319 909

## Description

### Field of the Invention

The present invention relates to a drive system structure of a semi-direct driven wind generating set, and belongs to the field of wind power generation technology.

### Background of the Invention

A semi-direct driven set has the advantages of both a direct driven set and a doubly-fed set, so compared with a doubly-fed wind generating set, a medium-speed permanent magnet set has no high-speed fault of a high-speed gearbox, less maintenance, good grid fault ride-through capability, and low cost per kilowatt hour in consideration of whole life cycle. In the process of large-scale development of wind generating sets, the technological development of semi-direct driven sets has been continuously favored. Although the cost per kilowatt hour of the whole life cycle of the semi-direct driven set within a certain power range has certain advantages, the production costs of key components of the set, such as a current generator, a power generator and a coupling, are relatively high. The production cost of the set should be reduced as much as possible to maintain certain market competitive advantage while guaranteeing the performance, reliability, maintainability and the like of the set. Semi-direct driven sets are mostly compact sets, which are mainly reflected in drive system structures of the sets. Different drive chain structures have great impact on the reliability, maintainability, cabin weight and length, and the like of the sets. Drive chains of the sets are in multiple structural forms according to different structural forms or integrated design structures of main shaft bearings, gearboxes and generators, and there are three typical structures: the first is a split structure in which the main shaft bearing, the gearbox and the generator are integrated with each other, such split structure is a conventional "three-point" structure or a double-bearing structure (split bearing seat), this drive chain is simple in structure, low in design difficulty and easy to maintain, but the dimensional chain is longer, the load borne by the gearbox is complicated, the reliability of the gearbox is poor, and the weight and size of the cabin are increased; the second is a partially integrated structure, for example, the main shaft bearing is integrated with the gearbox, or the gearbox is integrated with the generator as the most typical example, such structure has no couplings, the secondary sun gear of the gearbox directly outputs power to drive a generator shaft, the structure is simple, but the gearbox has no overload protection and is easily affected by shaft current, which has a certain impact on the performance of the set; and the third is a fully integrated structure, that is, the main shaft bearing, the gearbox and the generator are fully integrated, and such drive chain has a compact structure and a light and small cabin, but has high requirements for the design and manufacturing capabilities of parts and poor maintainability.

Chinese Patent Application CN 101 865 084 discloses a compact geared drive chain. The wind turbine includes a rotor connected to a low speed shaft, and a low speed shaft connected to a gearbox. The gearbox has a high speed shaft connected to a generator. The drive chain includes a bearing interposed between the gearbox and the generator.

United States Patent Application US 2011/142649 discloses a drive chain including a first stage carrier connected to the rotor hub. The first stage carrier includes one or more first stage planet gears that interact with a fixed first stage ring gear and a rotating first stage sun gear. A second stage planet carrier includes one or more second stage planet gears. The second stage planet carrier is rigidly connected to the first stage sun gear. The second stage planet gears interact with a rotating second stage ring gear and a non-rotating second stage sun gear. A generator includes a generator rotor and a generator stator, and the generator rotor is fixedly connected to the second stage ring gear so that both the generator rotor and the second stage ring gear rotate together.

United States Patent Application US 2016/319909 discloses an integrated transmission chain of hybrid-drive wind turbine and a gearbox used by the transmission chain, comprising a front housing body, a rear housing body, a main shaft and a planet carrier, and further comprising: an inner ring gear on the main shaft, N intermediate gears (N≧3), N planet gear shafts provided with a first stage planet gear and a second stage planet gear, an output shaft, and a sun gear. The inner ring gear, the intermediate gear and the first stage planet gear form a first stage fixed shaft transmission pair, and the second stage planet gear and the sun gear form a second stage fixed shaft transmission pair. An upwind end of the output shaft is axially rotatably disposed on the planet carrier and a downwind end of the output shaft protrudes outside the rear housing body; the downwind end which protrudes outside is connected to an upwind end of the rotor of the generator so as to drive the rotor of the generator in rotation, and a downwind end of the rotor of the generator is supported in an inner hole of the stator of the generator via a generator stator main bearing.

### Summary of the Invention

The technical problem to be solved by the present invention is to address the shortcomings of the prior art, and to provide a drive system structure of a semi-direct driven wind generating set, which can effectively improve the reliability of a gearbox, reduce the weight and length of a cabin and lower the production cost while guaranteeing the performance, reliability, maintainability, and the like of the set.
In order to solve the technical problem, the present invention provides a drive system of a semi-direct driven wind power generator, comprising a wind turbine system, a main shaft system, a gearbox, a generator, and a coupling, wherein the main shaft system comprises a main shaft, a transition flange, and a main shaft double-bearing structure, and the wind turbine system is connected to an end of the main shaft; the gearbox and the generator are of an integrated structure, comprising the gearbox, the generator, a gearbox flange, and a sun gear; the main shaft system is connected to the gearbox through the transition flange and the gearbox flange, and the sun gear passes through a hollow drive shaft of the generator and is connected to the coupling at the rear end of the generator; and an external wind load is transmitted to the generator through the wind turbine system, the main shaft system, the gearbox, and the coupling and furthermore
the main shaft double-bearing structure of the main shaft system comprises a bearing I, an adjusting ring, a bearing seat, and a bearing II, the bearing I and the bearing II being mounted on the main shaft, spaced by the adjusting ring and fixed by the integrated bearing seat.

The bearing I is preferably a double-row cylindrical bearing, and the bearing II is a double-row conical bearing.

The gearbox is preferably a semi-direct driven gearbox with a one-stage or two-stage planetary structure; the sun gear is an output shaft of the gearbox, with one end being a gear which meshes with a planetary gear of the gearbox, and the other end being a bare shaft which is connected to the coupling; and the power transmitted from the input end of the gearbox is transmitted to the generator through the sun gear and the coupling.

The generator is preferably a medium-speed permanent magnet generator, its front end is connected to the gearbox flange, its rear end is connected to the coupling through a generator drive shaft flange, and a brake mounting seat is reserved on a rear end cover of the generator.

The coupling is preferably a diaphragm type or link structure type coupling mechanism, comprising a brake disc, an expansion sleeve, a coupling flange, an intermediate pipe, and a torque limiter; the expansion sleeve is connected to the sun gear; the coupling is connected to the generator drive shaft flange through the coupling flange.

The wind turbine system is provided with a pitch system, a pitch bearing and blades.

Beneficial effects: The present invention is used for designing a drive system structure of a semi-direct driven wind generating set, where the drive system structure is designed with a bearing seat and a main shaft double-bearing structure, which can improve the rigidity of the main shaft system and the reliability of the gearbox; the integrated design of the gearbox and the generator has the characteristics of compact structure, short overall length of the drive chain, light weight, high reliability, and the like; the drive system is designed with a coupling, which can effectively solve the overload protection of the gearbox and the influence of shaft current, and can compensate the alignment error of the generator and the gearbox and the offset of the sun gear of the gearbox. In addition, the coupling mounted at the rear end of the generator is convenient to maintain and low in maintenance cost.

### Brief description of the Drawings

Fig. 1 is a schematic structural front view according to the present invention;
Fig. 2 is a schematic structural cross-sectional view according to the present invention.

In which: 1 wind turbine system, 2 main frame, 3 main shaft system, 4 gearbox, 5 generator, 6 coupling, 7 main shaft, 8 bearing I, 9 adjusting ring, 10 bearing seat, 11 bearing II, 12 transition flange, 13 gearbox flange, 14 sun gear, 15 generator drive shaft flange.

### Detailed Description of Embodiments

The present invention will be specifically described below in conjunction with the accompanying drawings and embodiments.

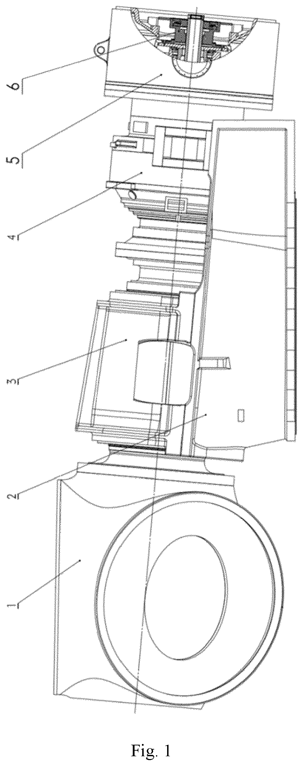

Fig. 1 is a schematic structural front view according to the present invention.

The present invention includes a wind turbine system 1, a main shaft system 3, a gearbox 4, a generator 5, and a coupling 6.

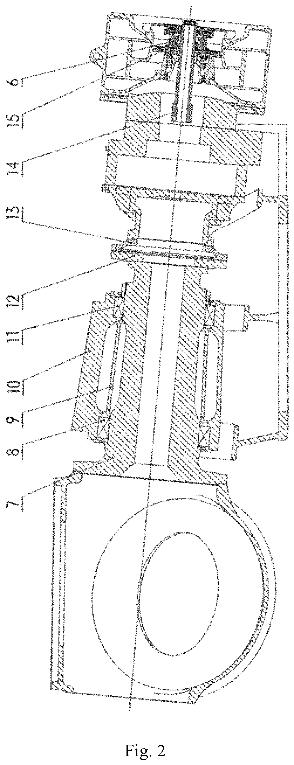

Fig. 2 is a schematic structural cross-sectional view according to the present invention.

The main shaft system includes a main shaft 7, a transition flange 12, and a main shaft double-bearing structure. The wind turbine system 1 is connected to an end of the main shaft 7.

The gearbox 4 and the generator 5 are of an integrated structure, including the gearbox 4, the generator 5, a gearbox flange 13, and a sun gear 14. The main shaft system 3 is connected to the gearbox 4 through the transition flange 12 and the gearbox flange 13, the gearbox 4 is connected to the generator 5 through a flange, the sun gear 14 passes through a hollow drive shaft of the generator 5 and is connected to the coupling 6 at the rear end of the generator 5, and the generator 5 is driven from the rear end through the coupling 6. An external wind load is transmitted to the generator 5 through the wind turbine system 1, the main shaft system 3, the gearbox 4, and the coupling 6.

The main shaft double-bearing structure of the main shaft system 3 includes a bearing I 8, an adjusting ring 9, a bearing seat 10, and a bearing II 11. The bearing I 8 and the bearing II 11 are mounted on the main shaft 7, spaced by the adjusting ring 9 to keep certain span, and fixed by the integrated bearing seat 10.

The bearing I 8 is a double-row cylindrical bearing, and the bearing II 11 is a double-row conical bearing.

The gearbox 4 is a semi-direct driven gearbox with a one-stage or two-stage planetary structure. The first-stage or two-stage sun gear 14 of the gearbox 4 is an output shaft of the gearbox 4. One end of the sun gear 14 is a gear which meshes with a planetary gear of the gearbox, and the other end of the sun gear 14 is a bare shaft which is connected to the coupling 6 through an expansion sleeve. The gearbox 4 is connected to the generator 5 through a flange. The power transmitted from an input end of the gearbox 4 is transmitted to a generator drive shaft flange 15 of the generator 5 through the sun gear 14 and the coupling 6. The generator drive shaft flange 15 is an input shaft of the generator 5.

The generator 5 is a medium-speed permanent magnet generator, its front end is connected to the gearbox flange 13, and its rear end is connected to the coupling 6 through the generator drive shaft flange 15. A brake mounting seat is reserved on a rear end cover of the generator 5, and the generator 5 is driven from the rear end.

The coupling 6 is a diaphragm type or link structure type coupling mechanism, including a brake disc, an expansion sleeve, a coupling flange, an intermediate pipe, and a torque limiter; the expansion sleeve is used to connect the coupling 6 with the sun gear 14; the coupling flange is used to connect the coupling 6 with the generator drive shaft flange 15; the intermediate pipe has an insulating function; and the torque limiter plays a role of protection. The coupling 6 has the functions of insulation, torque protection and error compensation, thereby preventing the gearbox from being overloaded and affected by shaft current, and compensating the alignment error of the generator 5 and the gearbox 4.

The wind turbine system 1 is provided with a pitch system, a pitch bearing and blades.

The operating principle of the present invention is as follows:
The present invention is a partially integrated drive chain structure of a semi-direct driven set, where the main shaft system 3 with the bearing seat 10 and the main shaft double-bearing structure designed can improve the rigidity of the main shaft system 3 and the reliability of the gearbox; the integrated design of the gearbox 4 and the generator 5, and the coupling 6 can effectively solve the overload protection of the gearbox 4 and the influence of the shaft current, and can compensate the alignment error of the generator 5 and the gearbox 4 and the offset of the gearbox sun gear 14. The external wind load is transmitted to the generator 5 through the wind turbine system 1, the main shaft system 3, the gearbox 4, and the coupling 6. The main shaft system 3 is connected to the gearbox flange 13 through the transition flange 12. The gearbox sun gear 14 is an output shaft of the gearbox 4, and the power transmitted from the input end of the gearbox 4 is transmitted to the generator drive shaft flange 15 of the generator 5 through the gearbox sun gear 14 and the coupling 6.

The present invention is used for designing a drive system structure of a semi-direct driven wind generating set, where the drive system structure is designed with a bearing seat and a main shaft double-bearing structure, which can improve the rigidity of the main shaft system and the reliability of the gearbox; the integrated design of the gearbox and the generator has the characteristics of compact structure, short overall length of the drive chain, light weight, high reliability, and the like; the drive system is designed with a coupling, which can effectively solve the overload protection of the gearbox and the influence of the shaft current, and can compensate the alignment error of the generator and the gearbox and the offset of the sun gear of the gearbox. In addition, the coupling mounted at the rear end of the generator is convenient to maintain and low in maintenance cost.

The foregoing embodiments of the present invention are merely illustrative, but not exclusive. All modifications within the scope of the present invention or the equivalent scope of the present invention are included in the present invention. The scope of protection is defined by the appended claims.

## Claims

1. A drive system of a semi-direct driven wind generating set, comprising a wind turbine system (1), a main shaft system (3), a gearbox (4), a generator (5), and a coupling (6), wherein the main shaft system (3) comprises a main shaft (7), a transition flange (12), and a main shaft double-bearing structure, the wind turbine system (1) is connected to an end of the main shaft (7); the gearbox (4) and the generator (5) are of an integrated structure, comprising the gearbox (4), the generator (5), a gearbox flange (13), and a sun gear (14);
the main shaft system (3) is connected to the gearbox (4) through the transition flange (12) and the gearbox flange (13), and the sun gear (14) passes through a hollow drive shaft of the generator (5) and is connected to the coupling (6) at the rear end of the generator (5); and an external wind load is transmitted to the generator (5) through the wind turbine system (1), the main shaft system (3), the gearbox (4), and the coupling (6, **characterized in that** the main shaft double-bearing structure of the main shaft system (3) comprises a bearing I (8), an adjusting ring (9), a bearing seat (10), and a bearing II (11), and the bearing I (8) and the bearing II (11) are mounted on the main shaft (7), spaced by the adjusting ring (9) and fixed by the integrated bearing seat (10).

2. The drive system of a semi-direct driven wind generating set according to claim 1, wherein the bearing I (8) is a double-row cylindrical bearing, and the bearing II (11) is a double-row conical bearing.

3. The drive system of a semi-direct driven wind generating set according to claim 1, wherein the gearbox (4) is a semi-direct driven gearbox with a one-stage or two-stage planetary structure; the sun gear (14) is an output shaft of the gearbox (4), with one end being a gear which meshes with a planetary gear of the gearbox (4), and the other end being a bareshaft which is connected to the coupling (6); and the power transmitted from an input end of the gearbox (4) is transmitted to the generator (5) through the sun gear (14) and the coupling (6).

4. The drive system of a semi-direct driven wind generating set according to claim 1, wherein the generator (5) is a medium-speed permanent magnet generator, its front end is connected to the gearbox flange (13), its rear end is connected to the coupling (6) through a generator drive shaft flange (15), and a brake mounting seat is reserved on a rear end cover of the generator (5).

5. The drive system of a semi-direct driven wind generating set according to claim 1, wherein the coupling (6) is a diaphragm type or link structure type coupling mechanism, comprising a brake disc, an expansion sleeve, a coupling flange, an intermediate pipe, and a torque limiter; the expansion sleeve is connected to the sun gear (14); and the coupling (6) is connected to the generator drive shaft flange (15) through the coupling flange.

6. The drive system of a semi-direct driven wind generating set according to any one of claims 1-5, wherein the wind turbine system (1) is provided with a pitch system, a pitch bearing and blades.

## Patentansprüche

1. Antriebssystem eines halbdirekten angetriebenen Windenergieerzeugungssatzes, umfassend ein Windkraftanlagesystem (1), ein Hauptwellensystem (3), ein Getriebe (4), einen Generator (5), und eine Kupplung (6), wobei das Hauptwellensystem (3) eine Hauptwelle (7), einen Übergangsflansch (12), und eine Hauptwellendoppellagerstruktur umfasst, das Windkraftanlagesystem (1) mit einem Ende der Hauptwelle (7) verbunden ist; das Getriebe (4) und der Generator (5) zu einer integrierten Struktur gehören, die das Getriebe (4), den Generator (5), einen Getriebeflansch (13) und ein Sonnenrad (14) umfasst; das Hauptwellensystem (3) über den Übergangsflansch (12) und den Getriebeflansch (13) mit dem Getriebe (4) verbunden ist, und das Sonnenrad (14) durch eine Hohlantriebswelle des Generators (5) läuft und am Hinterende des Generators (5) mit der Kupplung (6) verbunden ist; und eine auswendige Windbelastung über das Windkraftanlagesystem (1), das Hauptwellensystem (3), das Getriebe (4) und die Kupplung (6) auf den Generator (5) übertragen wird, **dadurch gekennzeichnet, dass** die Hauptwellendoppellagerstruktur des Hauptwellensystems (3) ein Lager I (8), einen Stellring (9), einen Lagersitz (10) und ein Lager II (11) umfasst, und das Lager I (8) und das Lager II (11) auf dem Hauptwelle (7) montiert sind und vom Stellring (9) beabstandet sind und vom Lagersitz (10) befestigt sind.

2. Antriebssystem eines halbdirekten angetriebenen Windenergieerzeugungssatzes nach Anspruch 1, wobei das Lager I (8) ein zweireihiges Zylinderlager, und das Lager II (11) ein zweireihiges Kegellager ist.

3. Antriebssystem eines halbdirekten angetriebenen Windenergieerzeugungssatzes nach Anspruch 1, wobei das Getriebe (4) ein halbdirektes angetriebenes Getriebe mit eine einstufige oder zweistufige Planetenstruktur ist; das Sonnenrad (14) eine Ausgangswelle des Getriebes (4) ist, deren ein Ende ein Zahnrad ist, das mit einem Planetenrad des Getriebes (4) ineinandergreift, und das andere Ende eine glatte Welle ist, die mit der Kupplung (6) verbunden ist; und die von einem Eingangsende des Getriebes (4) übertragene Energie über das Sonnenrad und die Kupplung (6) auf den Generator (5) übertragen wird.

4. Antriebssystem eines halbdirekten angetriebenen Windenergieerzeugungssatzes nach Anspruch 1, wobei der Generator (5) ein mittelschneller Dauermagnetgenerator ist, dessen Vorderende mit dem Getriebeflansch (13) verbunden ist, dessen Hinterende über einen Generatorantriebswellenflansch (15) mit der Kupplung (6) verbunden ist, und ein Bremsmontagesitz an einem Hinterendedeckel des Generators (5) vorbehalten ist.

5. Antriebssystem eines halbdirekten angetriebenen Windenergieerzeugungssatzes nach Anspruch 1, wobei die Kupplung (6) ein Kupplungsmechanismus der Diaphragma-Art oder der Linkstruktur-Art ist, umfassend eine Bremsscheibe, eine Dehnbuchse, einen Kupplungsflansch, ein Zwischenrohr und einen Drehmomentbegrenzer; die Dehnbuchse mit dem Sonnenrad (14) verbunden ist; und die Kupplung (6) über den Kupplungsflansch mit dem Generatorantriebswellenflansch (15) verbunden ist.

6. Antriebssystem eines halbdirekten angetriebenen Windenergieerzeugungssatzes nach einem der Ansprüche 1 bis 5, wobei das Windkraftanlagesystem (1) mit einem Rotorblattverstellungssystem, einem Rotorblattlager und Rotorblättern ausgestattet ist.

## Revendications

1. Système d'entraînement pour un ensemble entraîné de production d'énergie éolienne semi-directe comprenant un système éolien (1), un système à arbre principal (3), un train d'engrenages (4), un générateur(5) , et un accouplement (6), dans lequel le système à arbre principal (3) comprend un arbre principal (7), une bride de transition (12), et une structure à double palier pour arbre principal, le système éolien est raccordé à une extrémité de l'arbre principal (7); le train d'engrenages (4) et le générateur (5) font partie d'une structure intégrée comprenant le train d'engrenages (4), le générateur (5), une bride de train d'engrenages (13) et un planétaire (14); le système à arbre principal (3) est raccordé au train d'engrenages (4) par l'intermédiaire de la bride de transition (12) et de la bride de train d'engrenages (13), et le planétaire (14) passe à travers un arbre d'entraînement creux du générateur (5) et est raccordé à l'accouplement (6) à l'extrémité arrière du générateur (5) ; et une charge de vent externe est transmise au générateur (5) par l'intermédiaire du système éolien (1), du système à arbre principal (3), du train d'engrenages (4), et de l'accouplement (6), **caractérisé en ce que** la structure à double palier pour arbre principal du système à arbre principal (3) comprend un palier I (8), une bague d'ajustement (9), un siège de palier (10), et un palier II (11), et **en ce que** le palier I (8) et le palier II (11) sont montés sur l'arbre principal (7), espacés par la bague d'ajustement (9) et fixés par le siège de palier intégré (10).

2. Système d'entraînement pour un ensemble entraîné de production d'énergie éolienne semi-directe selon la revendication 1, dans lequel le palier I (8) est un palier cylindrique à double rangée, et le palier II (11) est un palier conique à double rangée.

3. Système d'entraînement pour un ensemble entraîné de production d'énergie éolienne semi-directe selon la revendication 1, dans lequel le train d'engrenages (4) est un train d'engrenages (4) entraîné semi-direct présentant une structure planétaire à un étage ou à deux étages ; le planétaire (14) est un arbre de sortie du train d'engrenages (4), dont une extrémité est un engrenage qui est en prise avec un engrenage planétaire du train d'engrenages (4), et dont l'autre extrémité est un arbre nu raccordé à l'accouplement (6) ; et l'énergie transmise par l'extrémité d'entrée du train d'engrenages (4) est transmise au générateur par l'intermédiaire du planétaire (14) et de l'accouplement (6).

4. Système d'entraînement pour un ensemble entraîné de production d'énergie éolienne semi-directe selon la revendication 1, dans lequel le générateur (5) est un générateur à aimants permanents de vitesse moyenne, son extrémité frontale est raccordée à la bride de train d'engrenages (13), son extrémité arrière est raccordée à l'accouplement (6) par l'intermédiaire d'une bride d'arbre d'entraînement de générateur (15), et un siège de montage de frein est réservé sur un couvercle d'extrémité arrière du générateur (5).

5. Système d'entraînement pour un ensemble entraîné de production d'énergie éolienne semi-directe selon la revendication 1, dans lequel l'accouplement (6) est un mécanisme d'accouplement de type à diaphragme ou du type à structure de liaison, comprenant un disque de frein, un manchon expansible, une bride d'accouplement, un tube intermédiaire, et un limiteur de couple, le manchon expansible est raccordé au planétaire (14) ; et l'accouplement (6) est raccordé à la bride d'arbre entrainement de générateur (15) par l'intermédiaire de la bride d'accouplement.

6. Système d'entraînement pour un ensemble entraîné de production d'énergie éolienne semi-directe selon l'une quelconque des revendications 1 à 5, dans lequel le système éolien (1) est pourvu d'un système de réglage de pas, d'un palier de réglage de pas et de pales.
